# EUROPEAN PATENT APPLICATION

(11) **EP 1 695 860 A2**
(43) Date of publication of application: **30.08.2006**
(21) Application number: 06002490.8
(22) Date of filing: 07.02.2006
(51) Int. Cl.: B60K 37/06

(54) **Vehicular switch operation mechanism**

(30) Priority: 28.02.2005 JP 2005055000
(71) Applicant: Toyota Jidosha Kabushiki Kaisha, Toyota-shi, Aichi-ken, 471-8571 (JP)
(72) Inventor: Kawachi, Kazuhiro, Toyota-shi, Aichi-ken 471-8571 (JP); Uekita, Hiroshi, Toyota-shi, Aichi-ken 471-8571 (JP); Sakakibara, Kimio, Toyota-shi, Aichi-ken 471-8571 (JP); Muto, Masanobu, c/o Toyota Gosei Co.,Ltd, Nishikasugai-gun,Aichi-ken 452-8564 (JP); Omatsu, Naoki, c/o Toyota Gosei Co., Ltd., Nishikasugai-gun Aichi-ken 452-8564 (JP)
(74) Representative: Winter, Brandl, Fürniss, Hübner Röss, Kaiser, Polte Partnerschaft Patent- und Rechtsanwaltskanzlei

(57) **Abstract**

Operation switches (28), which a passenger operates with his/her fingers, are disposed on the front end of the upper portion of a console box (10), and a palm rest (18) on which the passenger rests his/her palm is set rearward of the operation switches (28). An operation knob (44) that releases the locked state of the console box (10) is disposed on a lower portion of the palm rest (18) in a range where the passenger can reach the operation knob (44) with his/her fingers. Consequently, when the passenger wishes to adjust the front-rear position of the palm rest (18), the passenger can move the console box (10) by simply lifting up the operation knob (44) with one hand to release the locked state, and without having to conduct an operation such as opening a lid or the like.

## Description

### BACKGROUND OF THE INVENTION

### Field of the Invention

The present invention relates to a vehicular switch operation mechanism including a palm rest that is disposed rearward of an operation portion and on which a passenger rests his/her palm when operating the operation portion with his/her fingers.

### Description of the Related Art

Japanese Patent Application Publication (JP-A) No. 2003-280814, JP-A No. 2002-211277 and JP-A No. 2002-254950 disclose technology where a palm rest, on which a passenger rests his/her palm when operating various switches, is formed on the upper portion of a console box, which is one example of an operation portion installation.

Although it is not disclosed in the three aforementioned publications, technology has conventionally been known where the entire console box is disposed such that it is movable in the vehicle front-rear direction along guide rails, so that the front-rear position of the console box is adjustable. In this case, a lock device and a lock release knob are disposed in order to retain the console box in its position after adjustment.

However, when the driver is seated in the front seat and moves the console box frontward or rearward to adjust the position of the palm rest to a position that is optimal for the driver, the operation becomes complicated if the lock release knob is disposed at a position far from the palm rest. For example, if a lock release lever is disposed on the side surface of an inner storage compartment that appears when a lid on the upper portion of the console box is opened, it is necessary to first open the lid in order to release the locked state, and it is difficult to adjust the front-rear position of the palm rest with one hand.

### SUMMARY OF THE INVENTION

In view of this circumstance, it is an object of the present invention to obtain a vehicular switch operation mechanism with which a passenger can easily adjust the position of the palm rest while seated in a vehicular seat.

In a first aspect of the invention, a vehicular switch operation mechanism, having an operation portion that is disposed on an operation portion installation disposed adjacent to a vehicular seat and which a passenger operates with his/her fingers and a palm rest that is disposed rearward of the operation portion and on which the passenger rests his/her palm when the passenger operates the operation portion with his/her fingers, includes: palm rest moving means for moving the palm rest in a vehicle front-rear direction, a vehicle width direction, or a vehicle diagonal direction; locking means that retains the palm rest in the position after movement; and release means that is disposed in a range where the passenger can reach the release means with his/her fingers when the passenger rests his/her palm on the palm rest and is for releasing the locked state by the locking means.

In a second aspect of the invention, the palm rest moving means is configured by a palm rest moving mechanism that moves the palm rest relative to the operation portion installation, and the locking means is configured by a palm rest locking mechanism that retains the palm rest in the position to which the palm rest has been moved by the palm rest moving mechanism.

In a third aspect of the invention, the palm rest moving means is configured by an operation portion installation moving mechanism that moves the operation portion installation integrally with the palm rest with respect to a vehicle body floor in the vehicle front-rear direction, the vehicle width direction, or the vehicle diagonal direction, and the locking means is configured by an operation portion installation locking mechanism that retains the operation portion installation in the position to which the operation portion installation has been moved by the operation portion installation moving mechanism.

In a fourth aspect of the invention, the palm rest moving means further includes an operation portion installation moving mechanism that moves the operation portion installation integrally with the palm rest with respect to a vehicle body floor in the vehicle front-rear direction, the vehicle width direction, or the vehicle diagonal direction, and the locking means further includes an operation portion installation locking mechanism that retains the operation portion installation in the position to which the operation portion installation has been moved by the operation portion installation moving mechanism. Moreover, the release means is configured by a first release portion for releasing the locked state of the palm rest by the palm rest locking mechanism and a second release portion for releasing the locked state of the operation portion installation by the operation portion installation locking mechanism.

In a fifth aspect of the invention, the vehicular switch operation mechanism further includes: an upper lid member that can close an inner compartment inside the operation portion installation and with which the palm rest is integrally disposed; and rotating means for rotating the upper lid member, wherein the locked state of the palm rest by the locking means is released by the release means and the palm rest is moved to a predetermined rotation position by the palm rest moving means, whereby the rotation of the upper lid member via the rotating means is enabled, such that the inner compartment is openable/closeable.

In a sixth aspect of the invention, the release means based on any of the first to fifth aspects is disposed on a lower portion or a side portion of the palm rest.

According to the first aspect, when the passenger wishes to operate the operation portion disposed on the operation portion installation disposed adjacent to the vehicular seat, the passenger places his/her palm on the palm rest disposed rearward of the operation portion and operates the operation portion with his/her fingers.

But sometimes, when the passenger wishes to operate the operation portion with his/her fingers, the position of the palm rest in the vehicle front-rear direction is too far frontward or too far rearward for the passenger (the same is true in regard also to the vehicle width direction or the vehicle diagonal direction). In such a case, the passenger need only release the locked state by the locking means with the release means and use the palm rest moving means to move the palm rest in the vehicle front-rear direction such that the position of the palm rest becomes an optimal position. When the passenger finishes adjusting the position of the palm rest, the palm rest is retained in the position after movement by the locking means.

In this aspect, release means for releasing the locked state by the locking means is disposed in a range where the passenger can reach the release means with his/her fingers when the passenger rests his/her palm on the palm rest. Thus, the passenger can adjust the position of the palm rest while his/her palm is placed on the palm rest. In other words, there is the excellent effect that the passenger can easily adjust the position of the palm rest while the passenger is seated in the vehicular seat.

According to the second aspect, when the passenger wishes to adjust the position of the palm rest, the passenger need only release the locked state of the palm rest locking mechanism with the release means and use the palm rest moving mechanism to move the palm rest toward or away from the operation portion installation. That is, according to this aspect, the passenger can adjust the position of the palm rest using the operation portion disposed on the operation portion installation as a reference.

In other words, there is the excellent effect that the passenger can easily adjust the position of the palm rest to a position that is optimal with respect to the size of the palm of the passenger.

According to the third aspect of the invention, when the passenger wishes to adjust the position of the palm rest, the passenger need only release the locked state of the operation portion installation locking mechanism with the release means and use the operation portion installation moving mechanism to move the operation portion installation in the vehicle front-rear direction, the vehicle width direction, or the vehicle diagonal direction, with respect to the vehicle body floor. That is, according to this aspect, the passenger can adjust the position of the palm rest using the vehicle body floor as a reference.

In other words, there is the excellent effect that the passenger can easily adjust the position of the palm rest to a position that is optimal with respect to the length of the arm of the passenger.

According to the fourth aspect, the vehicular switch operation mechanism includes the palm rest moving mechanism and the palm rest locking mechanism of the second aspect and the operation portion installation moving mechanism and the operation portion installation locking mechanism of the third aspect. Additionally, when the passenger wishes to adjust the position of the palm rest using the operation portion as a reference, the passenger need only operate the first release portion to release the locked state of the palm rest locking mechanism, and when the passenger wishes to adjust the position of the palm rest using the vehicle body floor as a reference, the passenger need only operate the second release portion to release the locked state of the operation portion installation locking mechanism.

Moreover, because both the first release portion and the second release portion are disposed in a range where the passenger can reach them with his/her fingers when the passenger rests his/her palm on the palm rest, the passenger can conduct both operations with one hand.

In other words, there is the excellent effect that the passenger can easily adjust with one hand the position of the palm rest to a position that is optimal with respect to the size of the palm and the length of the arm of the passenger.

According to the fifth aspect, assuming that the palm rest is disposed on the upper lid member of the operation portion installation, when the passenger wishes to open the upper lid member, the passenger first releases the locked state of the palm rest by the locking means with the release means and then moves the palm rest to the predetermined rotation position with the palm rest moving means. With this operation, the passenger can open the upper lid member via the rotating means.

That is, according to this aspect, the passenger can open the upper lid member while resting his/her palm on the palm rest.

In other words, there is the excellent effect that not only can the ease with which the passenger can adjust the position of the palm rest be improved, but the ease with which the passenger can open and close the upper lid member of the operation portion installation can also be improved.

According to the sixth aspect, because the release means is disposed on a lower portion or a side portion of the palm rest, the release means can be set in a position suited for the movement of the fingers of the passenger when the passenger rests his/her palm on the palm rest. In other words, there is the excellent effect that the ease with which the passenger can operate the release means can be improved.

### BRIEF DESCRIPTION OF THE DRAWINGS

FIG. 1 is a longitudinal sectional view (along line 1-1 of FIG. 2) showing a state where a console box pertaining to a first embodiment of the invention is attached to the floor of a vehicle body;
FIG. 2 is an external perspective view of the console box shown in FIG. 1;
FIG. 3 is an exploded perspective view of the console box shown in FIG. 1;
FIG. 4 is a longitudinal sectional view of the portion of the console box from a palm rest to an operation portion shown in FIG. 1;
FIGS. 5A and 5B are perspective views showing the entire configuration of a slide mechanism that slidably supports the console box shown in FIG. 1;
FIG. 6 is a longitudinal sectional view showing, in a common cross-section, the slide mechanism shown in FIGS. 5A and 5B;
FIG. 7 is an external perspective view of a console box pertaining to a second embodiment of the invention;
FIG. 8 is an exploded perspective view of the console box shown in FIG. 7;
FIG. 9 is an enlarged transverse sectional view showing the peripheral structure of a first operation knob;
FIG. 10 is an enlarged perspective view showing a guide groove shown in FIG. 8;
FIG. 11 is a schematic side view showing front-rear adjustment of a palm rest;
FIG. 12 is a descriptive diagram showing the positional relationship between a lock pin and the palm rest;
FIG. 13A is an enlarged perspective view showing a modification of the guide groove shown in FIG. 10; and
FIG. 13B is a side view for describing the action of the modification of the guide groove shown in FIG 10.

### DETAILED DESCRIPTION OF THE INVENTION

### First Embodiment

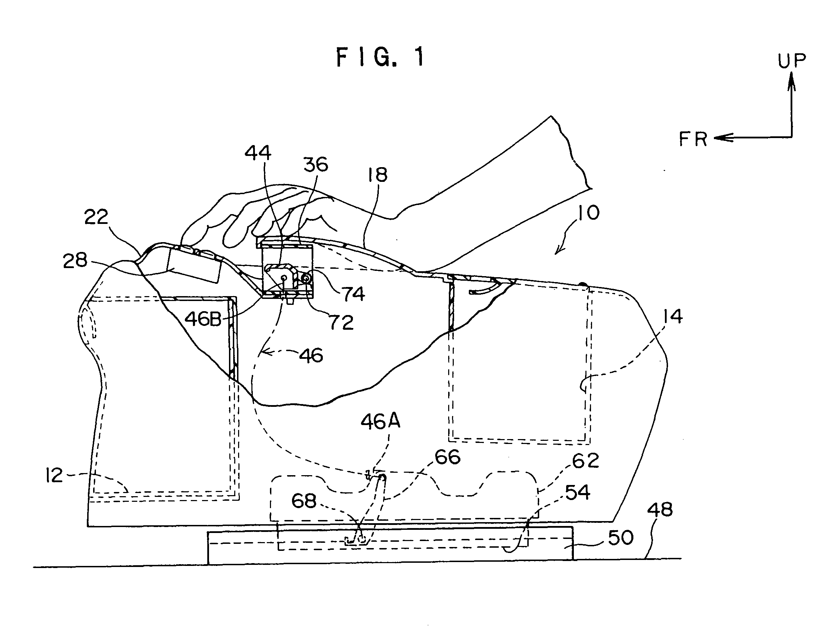

A first embodiment of a vehicular switch operation mechanism pertaining to the invention will be described below using FIGS. 1 to 6. In these drawings, arrow FR represents the frontward direction of a vehicle disposed with the vehicular switch operation mechanism, arrow UP represents the upward direction of the same vehicle, and arrow OUT represents the outward width-direction of the same vehicle.

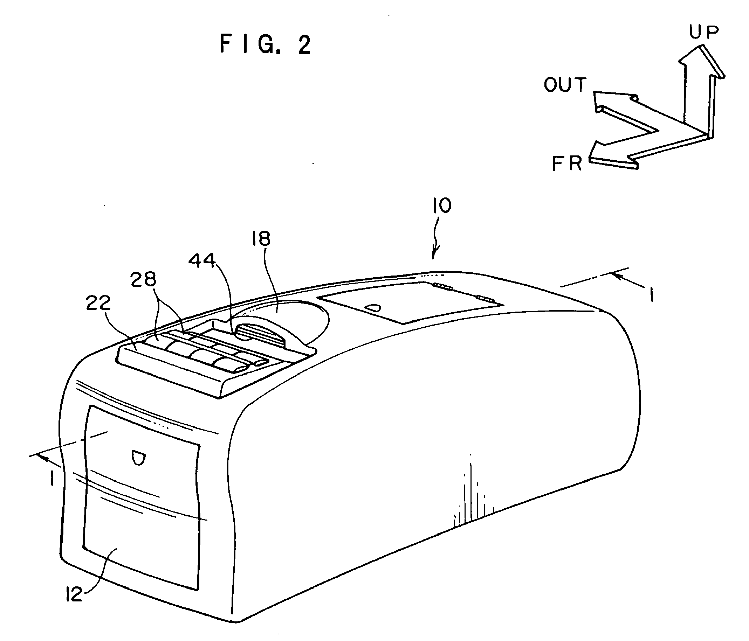

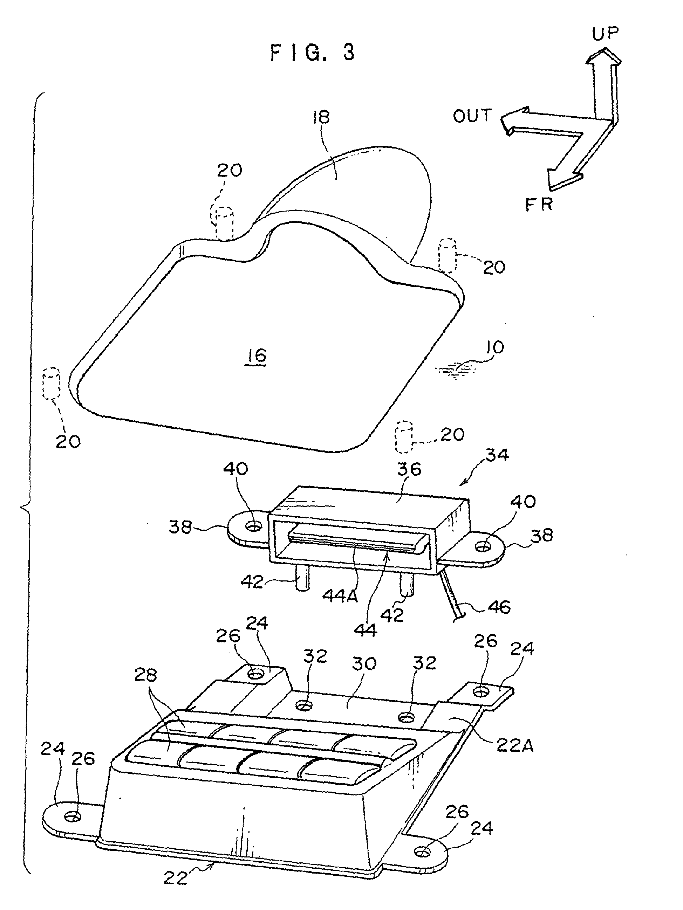

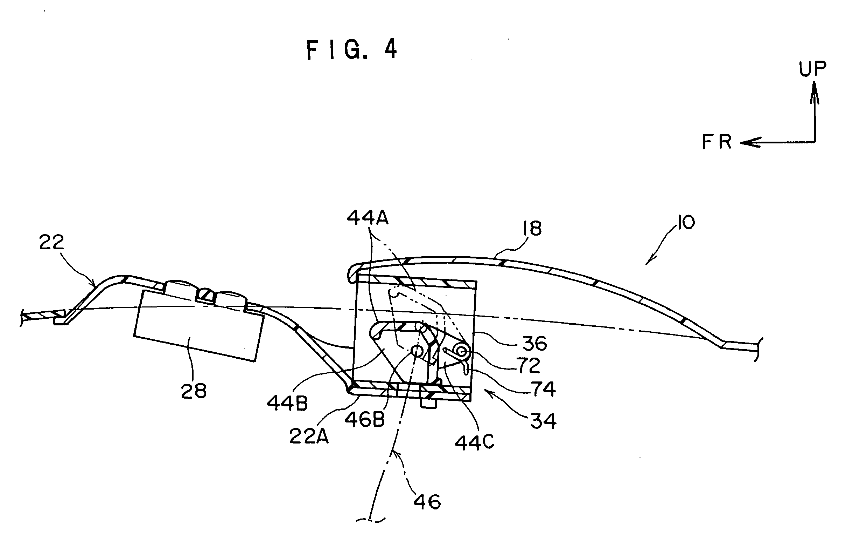

FIG. 1 is a longitudinal sectional view showing a state where a console box 10 pertaining to a first embodiment of the invention is attached to a floor 48 of a vehicle body. FIG. 2 is an external perspective view of the console box 10. FIG. 3 is an exploded perspective view of the main portions of the console box 10. FIG. 4 is a longitudinal sectional view of the portion of the console box 10 from a palm rest 18 to an operation portion shown in FIG. 1.

As shown in these drawings, the console box 10, which serves as an operation portion installation, is formed in a box-like shape that is long in the vehicle front-rear direction. The console box 10 is disposed adjacent to and between left and right front seats (vehicular seats). A drawer-type storage portion 12 and an open/close-type storage portion 14 are formed inside the console box 10.

As shown in FIG. 3, an open portion 16, which is substantially rectangular when seen in plan view, is formed in the front end of the upper portion of the console box 10. A palm rest 18, which protrudes upward such that it is exposed to the rear end edge of the open portion 16, is formed integrally and continuously in the front end of the upper portion of the console box 10. The palm rest 18 is configured such that the passenger can rest his/her palm on the palm rest 18 and operate later-described operation switches 28 with his/her fingers. Cylindrical bosses 20, in whose axial center portions are formed female threads (not shown), are integrally disposed on the four corners around the open portion 16.

A bezel 22, which is formed in a shape that protrudes upward and rearward, is attachable from below to the open portion 16 of the console box 10. Attachment-use flange portions 24 are integrally formed on the four corners of the bezel 22, and screw through-holes 26 are formed in the flange portions 24.

Plural operation switches 28, which the passenger operates with his/her fingers, are fitted together from below with the front portion of the bezel 22. A stepped portion 30, which is long in the vehicle width direction, is formed in a rear portion 22A of the bezel 22. A pair of left and right screw through-holes 32 is formed in the bottom portion of the stepped portion 30.

A knob assembly 34 is attached to the stepped portion 30 of the bezel 22. The knob assembly 34 includes a knob housing 36 that is internally hollow. Attachment-use flange portions 38 protrude from both side portions of the knob housing 36, and screw through-holes 40 are formed in the flange portions 38 at positions coaxial with the screw through-holes 26 in the rear end of the bezel 22.

A pair of left and right positioning pins 42, which are inserted into the screw through-holes 32 in the stepped portion 30, is integrally formed on the bottom surface of the knob housing 36. An operation knob 44 (the details of which will be described later), which the passenger operates with his/her fingers, is disposed inside the knob housing 36. Another end portion 46B of a cable 46 is connected to a rear end portion of the operation knob 44.

When the knob assembly 34 is to be attached to the bezel 22, first, the left and right positioning pins 42 of the knob assembly 34 are inserted into the left and right screw through-holes 32 in the stepped portion 30 of the bezel 22 such that the knob assembly 34 is mounted on the stepped portion 30.

Then, in this state, the bosses 20 of the console box 10 are inserted into the screw through-holes 26 formed in the four corners of the bezel 22, and unillustrated screws are screwed into the female threads of the bosses 20, whereby the knob housing 36 is provisionally joined to the bezel 22 such that they are sub-assembled, and the sub-assembled bezel 22 is attached from below to the open portion 16 of the console box 10.

As shown in FIG. 1, the console box 10 is supported such that it is slidable in the vehicle front-rear direction along fixed guide rails 50 disposed on the vehicle body floor 48.

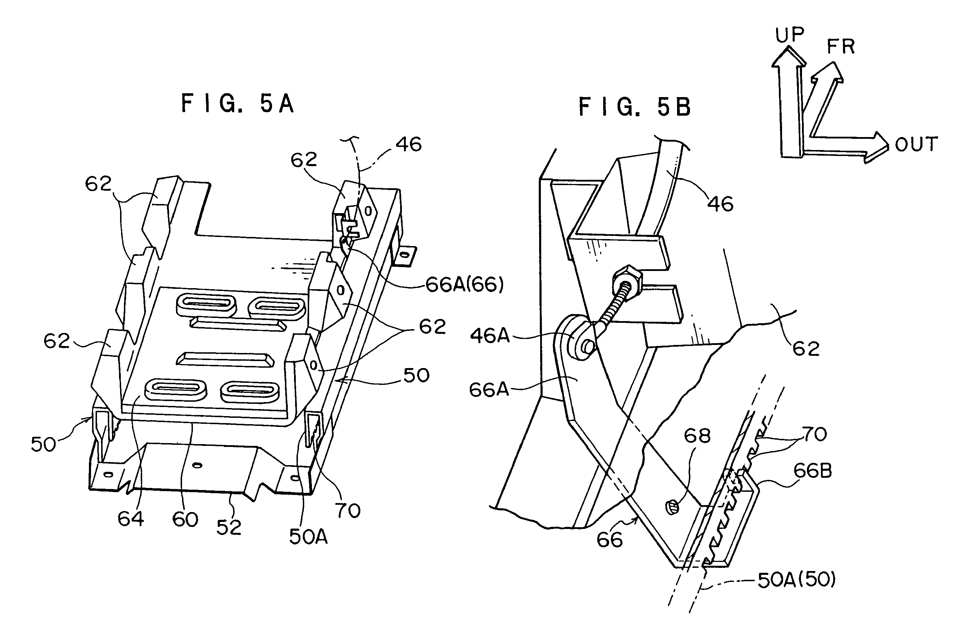

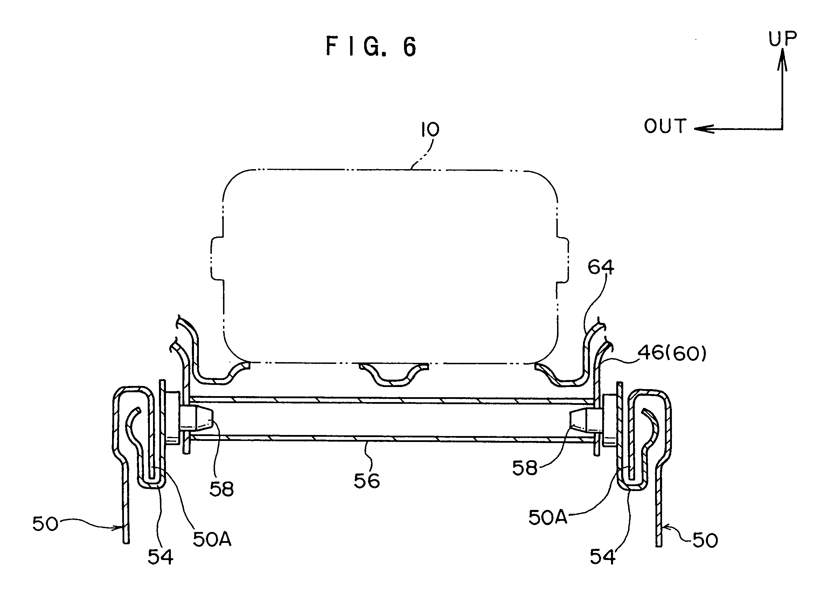

Specifically, as shown in FIGS. 5A, 5B and 6, a support 52 formed in a substantially rectangular frame-like shape when seen in plan view is fixed to the vehicle body floor 48. Left and right fixed guide rails 50 are formed on both side portions of the support 52. The fixed guide rails 50 are formed such that they are long along the vehicle front-rear direction and have substantially U-shaped cross-sections that open downward.

Movable guide rails 54 are fitted into the fixed guide rails 50 such that the movable guide rails 54 are slidable along the vehicle front-rear direction. The movable guide rails 54 are formed in long shapes that are shorter than the fixed guide rails 50 and have substantially U-shaped cross-sections that allow the movable guide rails 54 to fit together with the fixed guide rails 50 from below. The fixed guide rails 50 and the movable guide rails 54 are elements broadly understood as guide means or slide means.

The left and right movable guide rails 54 are coupled together by pipe-like coupler rods 56 and coupler pins 58 disposed at plural places (e.g., two front-rear places) in the longitudinal direction of the rails. The lower portion of a base plate 60 fixed to the console box 10 is supported on the axial-direction intermediate portions of the coupler pins 58 (end portions of the coupler rods 56). The base plate 60 includes, at three places on both its left and right side portions, mounts 62 that rise upward. The base plate 60 is fixed to the lower portion of the side surfaces of the console box 10 by the total of six mounts 62.

A support plate 64, which has a substantially rectangular tabular shape when seen in plan view, is disposed on the front portion of the base plate 60. The support plate 64 is configured such that it contacts the bottom surface of the console box 10 after assembly.

A lock lever 66 is disposed at a predetermined position on one side portion of the base plate 60. The lock lever 66 is configured to be swingable in the front-rear direction around a support shaft 68 (see FIG. 5B). One end portion 46A of the cable 46 is attached to an upper end portion 66A of the lock lever 66. A lock portion 66B, which protrudes outward in the vehicle width direction (toward the fixed guide rail 50), is formed on the lower portion of the lock lever 66. The lock portion 66B is formed like a forked pawl when seen in front view and is configured to engage with the to-be-locked portions 70 that are formed in the lower edge of a side wall SOA of the fixed guide rail 50 and comprise continuous convexo-concavities.

The lock lever 66 is always rotatingly urged, by unillustrated urging means such as a torsion coil spring, rearward around the support shaft 68 (in the clockwise direction in the side view of FIG. 1), that is, in the direction in which the lock portion 66B engages with the to-be-locked portions 70.

Here, as shown in FIG. 4, the knob assembly 34, that is, the operation knob 44, is disposed on the lower portion of the palm rest 18. Consequently, the operation knob 44 is disposed in a range where the passenger can reach the operation knob 44 with his/her fingers when the passenger rests his/her palm on the palm rest 18.

The operation knob 44 is configured to include a grip portion 44A that is formed in a substantial hook-like cross section and whose front side is open, a side wall 44B that is formed integrally with the width-direction end portion of the grip portion 44A, and an arm-like support portion 44C that is formed integrally with the rear surface of the grip portion 44A. The support portion 44C is supported such that it is swingable around a support shaft 72 disposed in the knob housing 36.

A torsion coil spring 74 broadly understood as urging means is wound onto the support shaft 72. One end portion of the torsion coil spring 74 is attached to the knob housing 36, and the other end portion of the torsion coil spring 74 is attached to the support portion 44C of the operation knob 44. Consequently, the torsion coil spring 74 always rotatingly urges the operation knob 44 in the counter-clockwise direction (in the direction from the position represented by the dotted lines in FIG. 4 to the position represented by the solid lines).

The other end portion 46B of the cable 46 is attached to the side wall 44B of the operation knob 44.

### Action and Effects of the First Embodiment

Next, the action and effects of the first embodiment will be described.

When the passenger wishes to operate the operation switches 28 disposed on the front side of the upper portion of the console box 10, the passenger need only rest his/her palm on the palm rest 18 disposed rearward of the operation switches 28 and operate the operation switches 28 with his/her fingers.

But sometimes, when the passenger wishes to operate the operation switches 28 with his/her fingers, the position of the palm rest 18 in the vehicle front-rear direction is too far frontward or too far rearward for the passenger. In such a case, the passenger need only rest his/her palm on the palm rest 18, place his/her fingers on the operation knob 44 at the undersurface side of the palm rest 18, and pull up the operation knob 44.

When the passenger pulls up the operation knob 44 with his/her fingers counter to the urging force of the torsion coil spring 74, the cable 46 is pulled in accompaniment therewith. For this reason, the lock lever 66 is swung toward the front side of the vehicle around the support shaft 68 counter to the urging force of the unillustrated urging means. Thus, the state of engagement between the lock portion 66B of the lock lever 66 and the to-be-locked portions 70 of the fixed guide rail 50 is released.

Then, when the passenger pushes the entire console box 10 frontward or rearward while resting his/her palm on the palm rest 18 and pulling up the operation knob 44, the console box 10 slides frontward or rearward along the fixed guide rails 50. Thus; the front-rear position of the palm rest 18 is adjusted such that it becomes optimal with respect to the length of the arm of the passenger.

When the passenger finishes adjusting the front-rear position of the palm rest 18, the passenger releases the operation knob 44. Thus, the operation knob 44 is returned to its former position by the urging force of the torsion coil spring 74, the lock lever 66 is returned to its former position by the urging force of the unillustrated urging means, the lock portion 66B again engages with the to-be-locked portions 70 of the fixed guide rail 50, and the palm rest 18 is retained in the position after movement (after the front-rear position has been adjusted).

In this manner, in the vehicular switch operation mechanism (console box structure) pertaining to the present embodiment, the operation knob 44 for releasing the locked state is disposed at the undersurface side of the palm rest 18, that is, in a range where the fingers of the passenger can reach the operation knob 44. Thus, the passenger can adjust the front-rear position of the palm rest 18 while resting his/her palm on the palm rest 18.

As a result, according to the present embodiment, the passenger can easily adjust the front-rear position of the palm rest 18 while the passenger is seated in the front seat, and without the passenger having to open and close a lid or the like.

Moreover, because the operation knob 44 is disposed at the undersurface side of the palm rest 18, this is excellent in terms of design because integrity with the palm rest 18 is brought about.

Also, in the vehicular switch operation mechanism pertaining to the present embodiment, the invention is applied to a sliding console box 10. Thus, the passenger adjusts the front-rear position of the palm rest 18 by sliding the console box 10. In other words, in the case of the present embodiment, the passenger can adjust the front-rear position of the palm rest 18 using the vehicle body floor 48 as a reference.

As a result, according to the present embodiment, the passenger can easily adjust the front-rear position of the palm rest 18 to a position that is optimal with respect to the length of the arm of the passenger.

Moreover, in the vehicular switch operation mechanism pertaining to the present embodiment, the operation knob 44 for releasing the locked state is disposed at the undersurface side of the palm rest 18. Thus, the operation knob 44 is disposed at a position suited to the movement of the fingers of the passenger when the passenger rests his/her palm on the palm rest 18. As a result, according to the present embodiment, the ease with which the passenger can operate the operation knob 44 to release the locked state can be improved.

### Second Embodiment

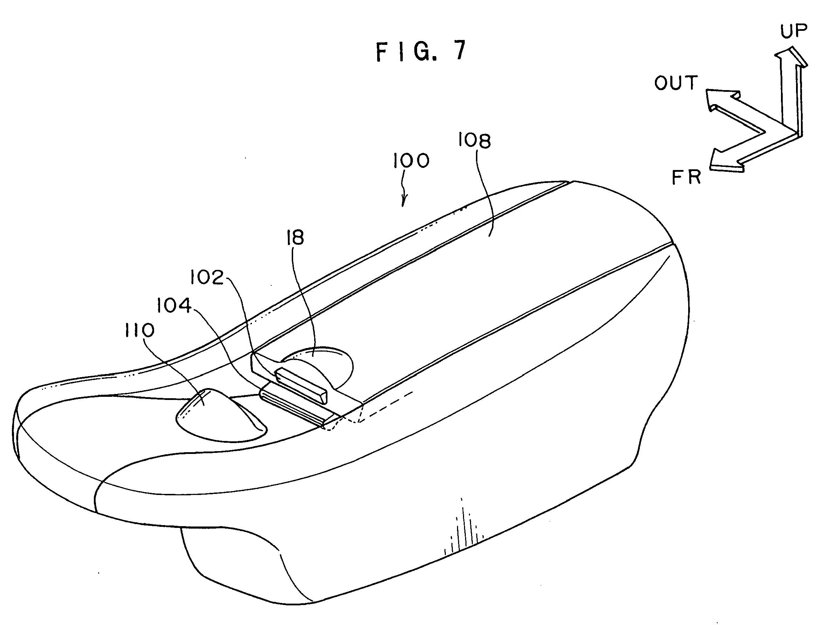

A second embodiment of the vehicular switch operation mechanism pertaining to the invention will now be described using FIGS. 7 to 13B. The same reference numerals will be given to constituent elements that are the same as those previously described in the first embodiment, and description of those same constituent elements will be omitted.

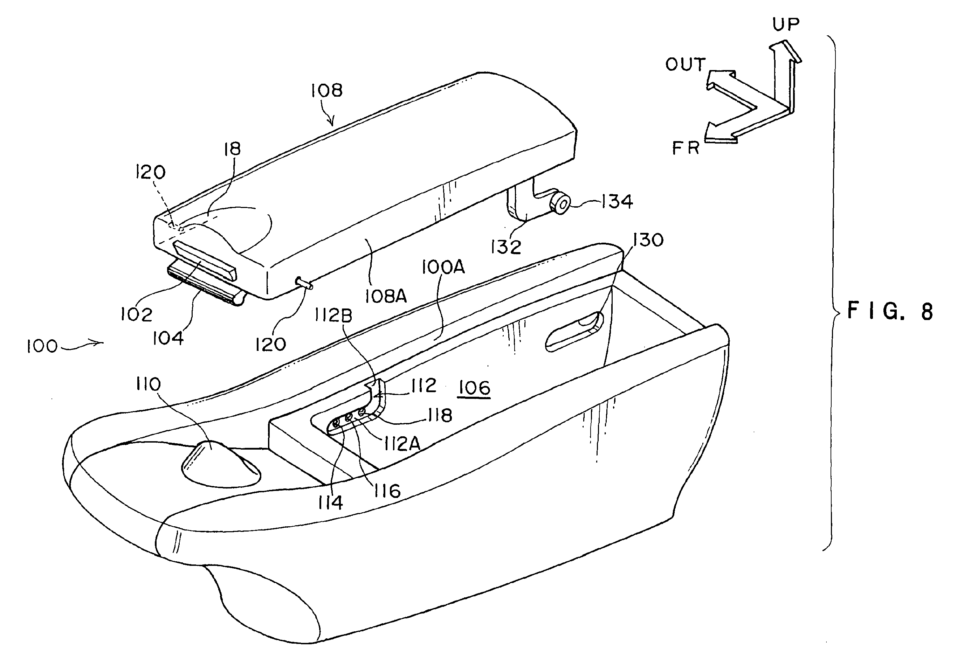

FIG. 7 is an external perspective view of a console box 100 pertaining to the second embodiment of the invention. FIG. 8 is an exploded perspective view of the console box 100.

As shown in these drawings, in the vehicular switch operation mechanism pertaining to the second embodiment, the palm rest 18 itself is disposed such that it is slidable in the vehicle front-rear direction with respect to the console box 100, which serves as an operation portion installation. The entire console box 100 is also supported such that it is slidable in the vehicle front-rear direction with respect to the vehicle body floor 48. Moreover, the vehicular switch operation mechanism is configured such that the sliding of the palm rest 18 and the sliding of the console box 100 can be conducted with a first operation knob 102 and a second operation knob 104 disposed on the lower portion of the palm rest 18. The details of this configuration will be described below.

Similar to the first embodiment, the console box 100 is formed in a substantially box-like shape that is long in the vehicle front-rear direction, and includes therein a relatively large storage compartment 106 (see FIG. 8). An upper lid member 108 for opening and closing the storage compartment 106 is disposed on the upper portion of the console box 100 such that the upper lid member 108 is slidable in the vehicle front-rear direction.

A controller (e.g., a paptic controller) 110 corresponding to the operation switches 28 of the first embodiment is set, in a shape protruding upward, on the front end of the upper portion of the console box 100.

The palm rest 18 is disposed along the front-rear direction rearward of the controller 110. The palm rest 18 is integrally formed in the center portion of the front end of the upper lid member 108. The first operation knob 102 and the second operation knob 104 are vertically arranged on the lower portion of the palm rest 18.

Because the mechanism by which the console box 100 slides frontward and rearward is the same as that of the first embodiment, description thereof will be omitted, and here the mechanism by which the palm rest 18 itself slides will be described.

Because the palm rest 18 is formed integrally with the upper lid member 108, the palm rest 18 is slidable in the vehicle front-rear direction with respect to the console box 100 by sliding the upper lid member 108.

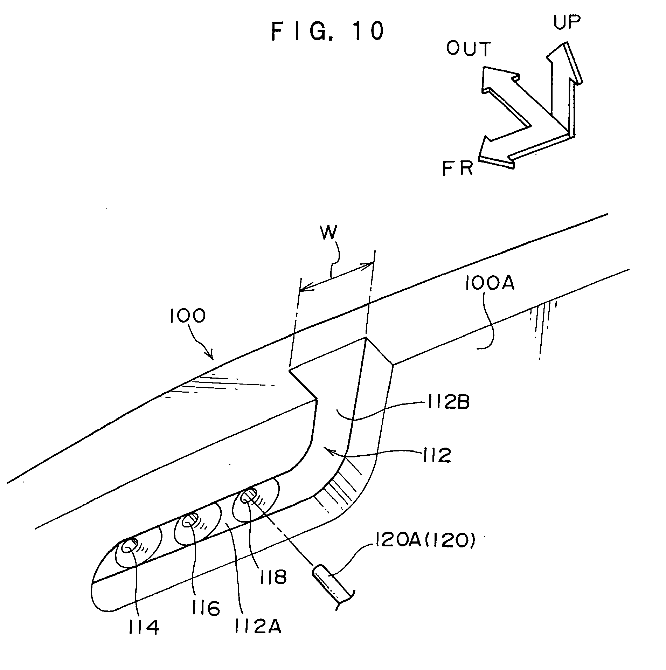

As shown in FIGS. 8 and 10, guide grooves 112, which are formed in left and right reversed substantial "L" shapes when seen in side view, are formed in opposing surfaces of both side walls 100A of the console box 100. Plural engagement holes (three in the present embodiment) comprising a first engagement hole 114, a second engagement hole 116, and a third engagement hole 118 are formed at predetermined intervals in a lower portion 112A of each of the guide grooves 112. The first engagement holes 114, the second engagement holes 116, and the third engagement holes 118 are formed in cone-like shapes. The second engagement holes 116 positioned intermediately correspond to a neutral position of the front-rear position of the palm rest 18. Upper end portions of upper portions 112B of the guide grooves 112 are open such that later-described lock pins 120 are insertable into the guide grooves 112, and each of the upper portions 112B has a groove width W (see FIG. 10) that is larger than the outer diameter of the lock pins 120.

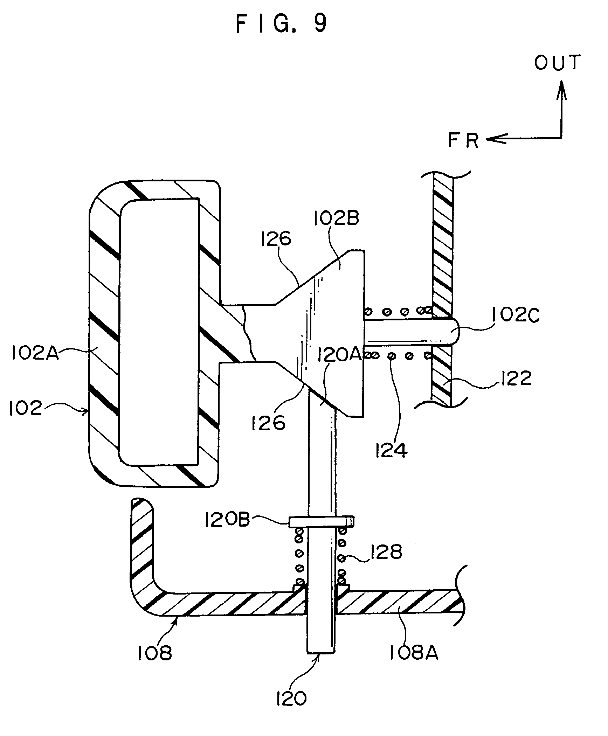

In correspondence thereto, the lock pins 120, whose axial direction is in the width direction of the upper lid member 108, are disposed in the front ends of both side surfaces of the upper lid member 108 such that the lock pins 120 are extendable and retractable. As shown in FIG. 9, the lock pins 120 are configured to extend and retract in the vehicle width direction in association with the movement of the first operation knob 102, which is disposed on the front end surface of the upper lid member 108, in the vehicle front-rear direction.

That is, the first operation knob 102 is configured by a push portion 102A that has a substantially hollow rectangular parallelepiped shape and which the passenger pushes with his/her fingers, a guide portion 102B that has a flask-like shape when seen in plan view and protrudes from the center portion of the rear end surface of the push portion 102A toward the rear side of the vehicle, and a rod-like support pin 102C that protrudes from the center portion of the rear end surface of the guide portion 102B toward the rear side of the vehicle.

The support pin 102C is supported in a wall 122 formed in the upper lid member 108 such that the support pin 102C is movable in the axial direction. A compression coil spring 124 broadly understood as urging means is wound onto the support pin 102C. One end portion of the compression coil spring 124 is directly attached to the wall 122, and the other end portion of the compression coil spring 124 is directly attached to the rear end surface of the guide portion 102B. Consequently, the compression coil spring 124 always pushes and urges the first operation knob 102 in the advancing direction (toward the front side of the vehicle).

Both side portions of the guide portion 102B serve as inclined surfaces 126 whose width-direction dimension becomes larger toward the rear side of the vehicle. Leading end portions 120A of the lock pins 120, which are supported on side walls 108A of the upper lid member 108 such that the lock pins 120 are movable in the axial direction, contact the inclined surfaces 126. For this reason, the leading end portions 120A of the lock pins 120 are formed as tapered surfaces conforming to the inclined surfaces 126.

A guard portion 120B is formed on the axial-direction intermediate portion of each of the lock pins 120, and a compression coil spring 128 broadly understood as urging means is wound onto each of the lock pins 120 between the guard portions 120B and the side walls 108A of the upper lid member 108. One end portion of each compression coil spring 128 is directly attached to the side walls 108A, and the other end portion of each compression coil spring 128 is directly attached to the guard portions 120B. Consequently, the compression coil springs 128 always push and urge the leading end portions 120A of the lock pins 120 in the direction in which they contact the inclined surfaces 126 of the guide portion 102B of the first operation knob 102. It will be noted that an unillustrated stopper configuration is added to the lock pins 120.

According to the above-described configuration, the lock pins 120 extend from and retract into the side walls 108A of the upper lid member 108 due to the relative positional relationship between the inclined surfaces 126 of the first operation knob 102 and the leading end portions 120A of the lock pins 120.

Returning now to FIG. 8, long holes 130 (only the long hole 130 at the far side of the paper surface is shown in FIG. 8), whose longitudinal direction is in the vehicle front-rear direction, are formed in the upper portions of the rear ends of both side surfaces of the storage compartment 106 in the console box 100. In correspondence thereto, left and right hinge levers 132 (only the hinge lever 132 at the near side of the paper surface is shown in FIG. 8) are disposed at the rear end side of the undersurface of the upper lid member 108.

The hinge levers 132 are formed in substantial "L" shapes when seen in side view, and guide rollers 134 are rotatably axially supported on the rear end portions of the hinge levers 132. The hole width of each of the long holes 130 is set to be slightly larger than the outer diameter of each of the guide rollers 134. Consequently, when the upper lid member 108 slides in the vehicle front-rear direction with respect to the console box 100, the guide rollers 134 rotate inside the long holes 130 in the vehicle front-rear direction, whereby the stability of the operation is ensured.

The long holes 130 are also portions that regulate how far the upper lid member 108 slides in the vehicle front-rear direction. The dimensions of each are set such that when the guide rollers 134 are positioned in the rear end portions of the long holes 130, the lock pins 120 become positioned in the rear end portions of the lower portions 112A of the guide grooves 112 and are allowed to pass through the upper portions 112B.

As described above, the first operation knob 102 is set in the front end surface of the upper lid member 108 such that the first operation knob 102 is extendable and retractable, and disposed such that the first operation knob 102 ordinarily protrudes a predetermined length from the front end surface toward the front side of the vehicle. As shown in FIGS. 7 and 8, the lock-releasing second operation knob 104 for sliding the console box 100 in the vehicle front-rear direction with respect to the vehicle body floor 48 is disposed below the first operation knob 102.

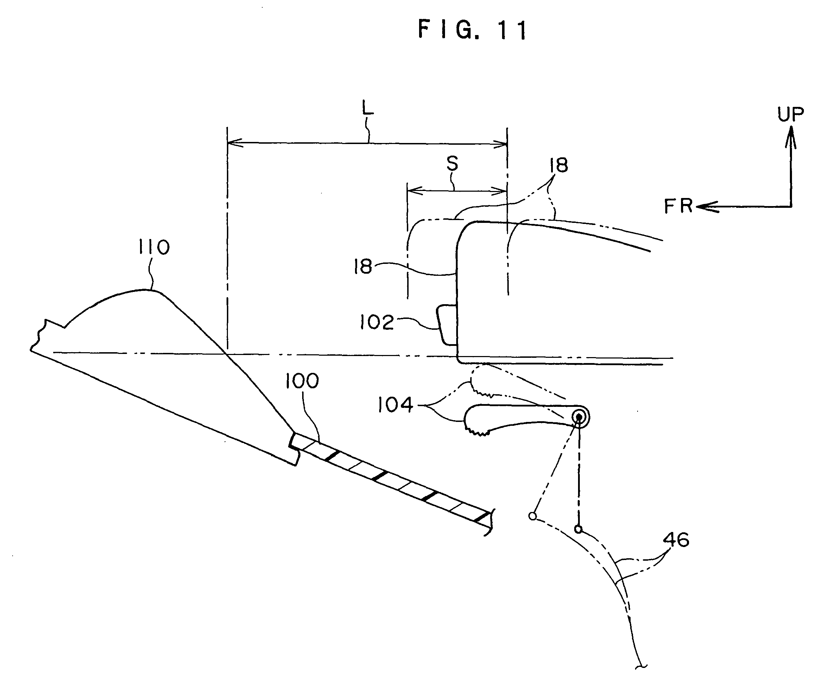

As shown in FIG. 11, the second operation knob 104 is fixedly disposed on the console box 100. In FIG. 11, the second operation knob 104 is shown in a simplified manner, but because the configuration itself is the same as previously described in the first embodiment, description thereof will be omitted here.

### Action and Effects of the Second Embodiment

Next, the action and effects of the second embodiment will be described.

When the passenger is seated in the front seat, places his/her palm on the palm rest 18, and the vehicle front-rear direction position of the palm rest 18 is not suitable to the passenger due to the relationship between the palm rest 18 and the length of the arm of the passenger, the passenger keeps his/her palm rested on the palm rest 18, places his/her fingers on the second operation knob 104 at the undersurface side of the palm rest 18, pulls up the second operation knob 104, slides the console box 100 frontward or rearward, and releases his/her fingers from the second operation knob 104 when the palm rest 18 reaches a suitable position.

Here, even if the passenger adjusts the vehicle front-rear direction position of the palm rest 18 to a position that is optimal in terms of the relationship between the palm rest 18 and the length of the arm of the passenger, different passengers have palms of different sizes. For this reason, when the passenger wishes to operate the controller 110 with his/her fingers while resting his/her palm on the palm rest 18, sometimes the interval (distance) L (see FIG. 11) between the position of the palm rest 18 in the vehicle front-rear direction and the operational position of the controller 110 is too long or too short. In this case, the passenger adjusts the position of the palm rest 18 with respect to the console box 100 in the following manner.

First, while resting his/her palm on the palm rest 18, the passenger places his/her fingers on the first operation knob 102 protruding from the front end surface of the upper lid member 108 and pushes the first operation knob 102 toward the rear side of the vehicle. As shown in FIG. 9, when the passenger pushes the push portion 102A of the first operation knob 102 toward the rear side of the vehicle counter to the urging force of the compression coil spring 124, the inclined surfaces 126 of the guide portion 102B are also displaced toward the rear side of the vehicle in accompaniment therewith. For this reason, the lock pins 120 relatively slide on the inclined surfaces 126 and arrive at the front end side of the inclined surfaces 126 due to the urging force of the compression coil springs 128.

Thus, the lock pins 120 are retracted inward of the upper lid member 108, separate from the second engagement holes 116 (neutral position) in the console box 100, and the locked state between the lock pins 120 and the second engagement holes 116 is released.

Next, while the passenger pushes the push portion 102A of the first operation knob 102 toward the rear side of the vehicle, the passenger slides the palm rest 18 toward the front side of the vehicle or toward the rear side of the vehicle. The passenger may also release the push portion 102A of the first operation knob 102 at the point in time when the locked state is released and the upper lid member 108 has been slid slightly frontward or rearward.

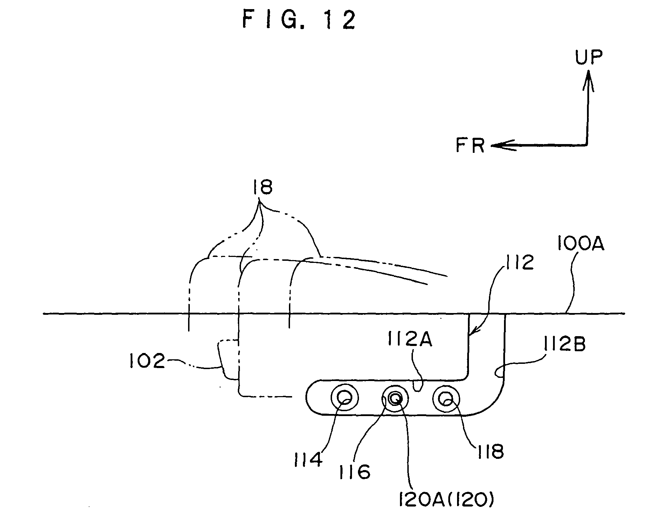

Then, as shown in FIGS. 11 and 12, in the case of a passenger whose palm is relatively small, the passenger slides the palm rest 18 toward the front side of the vehicle to cause the lock pins 120 to engage with the first engagement holes 114. Conversely, in the case of a passenger whose palm is relatively large, the passenger slides the palm rest 18 toward the rear side of the vehicle to cause the lock pins 120 to engage with the third engagement holes 118.

By doing this, the passenger can optimize, in terms of the relationship with the size of the palm of the passenger, the position of the palm rest 18 in the vehicle front-rear direction using the controller 110 as a reference. Incidentally, in the present embodiment, the movable range (the range in which the front-rear position of the palm rest 18 can be adjusted) of the palm rest 18 is S (see FIG. 11).

In the vehicular switch operation mechanism (console box structure) pertaining to the present embodiment, the front-rear position of the palm rest 18 is also adjustable using the controller 110 as a reference. Thus, not only can the front-rear position of the palm rest 18 be optimized in accordance with the length of the arm of the passenger, but it can also be optimized in accordance with the size of the palm of the passenger.

Moreover, because the first operation knob 102 and the second operation knob 104 are disposed on the lower portion of the palm rest 18 in a range where the passenger can reach them with his/her fingers, the passenger can operate the first operation knob 102 and the second operation knob 104 with one hand.

Thus, according to the present embodiment, the passenger can easily adjust with one hand the front-rear position of the palm rest 18 to a position that is optimal with respect to the size of his/her palm and the length of his/her arm.

Also, in the vehicular switch operation mechanism pertaining to the present embodiment, when the passenger wishes to remove objects stored in the storage compartment 106 of the console box 100, the passenger pushes the push portion 102A of the palm rest 18 with a full stroke toward the rear side of the vehicle, causes the guide rollers 134 to be positioned in the rear end portions of the long holes 130, and lifts up the upper lid member 108, whereby the lock pins 120 pass through the upper portions 112B of the guide grooves 112 so that the passenger can open the upper lid member 108. That is, according to the present embodiment, the passenger can open the upper lid member 108 while resting his/her palm on the palm rest 18.

As a result, according to the present embodiment, not only can the ease with which the passenger can adjust the front-rear position of the palm rest 18 be improved, but the ease with which the passenger can open and close the upper lid member 108 of the console box 100 can also be improved. Consequently, the ease with which the passenger can remove objects stored in the storage compartment 106 is also extremely good.

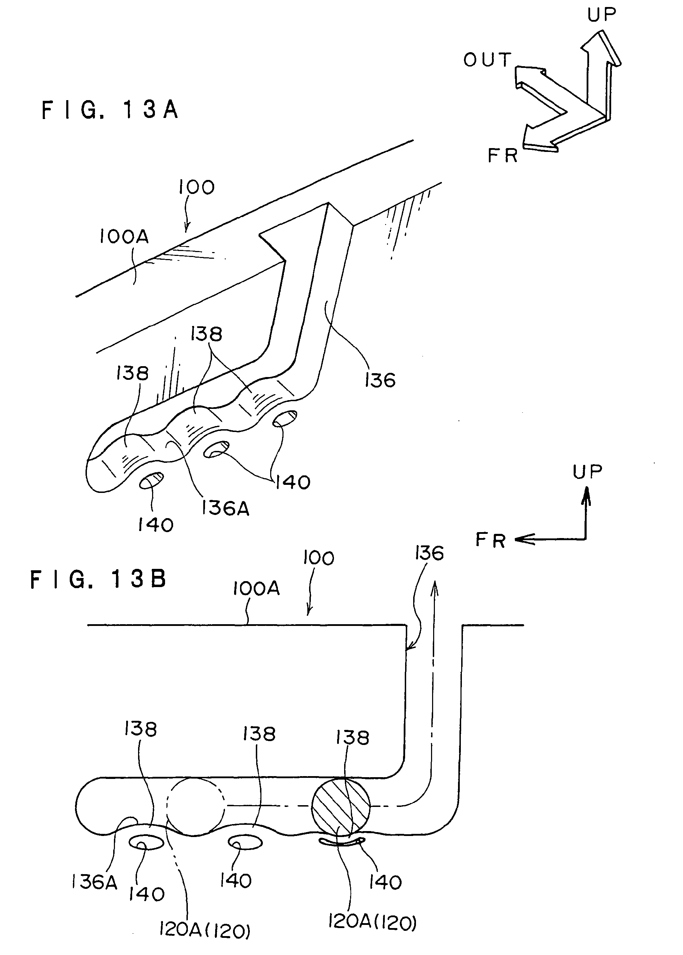

In the above embodiment, the first engagement holes 114, the second engagement holes 116 and the third engagement holes 118 were formed in the guide grooves 112, but the invention is not limited to this. For example, as shown in FIGS. 13A and 13B, guide grooves 136 that have left and right reversed "L" shapes when seen in side view may be formed in the console box 100, bottom surfaces 136A of the guide grooves 136 may be formed such that they have wave-like shapes, and substantially oval holes 140 may be set directly below portions 138 that are the crests of the waves.

In this case, when the lock pins 120 are to be moved in the front or rear direction, the holes 140 bend in the direction in which they collapse vertically, and the crest portions 138 are elastically displaced downward, whereby the lock pins 120 can be moved in the guide grooves 136 in the front or rear direction.

Also, when this configuration is adopted, there is the advantage that a feeling of moderation is obtained when the palm rest 18 is moved frontward or rearward (in other words, the movement is conducted gradually).

### Supplementary Description of the Preceding Embodiments

In the above-described embodiments, the operation knob 44, the first operation knob 102 and the second operation knob 104 (release means) were disposed on the lower portion of the palm rest 18 in a range where the passenger could reach them with his/her fingers, but the invention is not limited to this. The operation knob 44, the first operation knob 102 and the second operation knob 104 may also be disposed in a range where the passenger can reach them with his/her fingers while resting his/her palm on the palm rest 118. For example, the release means may be disposed on a side portion of the palm rest 18 in a range where the passenger can reach the release means with his/her fingers.

Also, in the second embodiment, both the first operation knob 102 and the second operation knob 104 were disposed on the lower portion of the palm rest 18, but a configuration may also be adopted where the first operation knob 102 is disposed on a side portion of the palm rest 18 and where the second operation knob 104 is disposed on the lower portion of the palm rest 18. Moreover, the release means may be disposed in the vicinity of the operation portion.

Also, in the first embodiment, the operation switches 28 were used as the operation portion, and in the second embodiment, the controller 110 was used as the operation portion. However, any configuration is included in the concept of the operation portion of the invention as long as the operation portion has a configuration such that the passenger can operate the operation portion while resting his/her palm on the palm rest.

Consequently, from the standpoint of the design concept of the vehicle, operability, and convenience, an operation portion having another configuration―such as push-button switches, switches that are swung, a touch-type operation panel, a dial-type switch, or an operation portion where a ball is rotated and a pointer is moved and clicked-upon―may be appropriately selected.

Moreover, in the above-described embodiments, a configuration was adopted where the lock portion 66B of the lock lever 66 was made to engage with the pulse wave-like to-be-locked portions 70 disposed on the lower edge of the side wall 50A inside the fixed guide rail 50. However, the present invention is not limited to this and may also utilize another lock mechanism configuration.

For example, a configuration may also be adopted where numerous engagement holes are formed at a predetermined pitch in a side wall inside a fixed guide rail (lower rail) such as utilized in a sheet slide mechanism, and a hooked claw-like lock portion of a lock lever may engage with the engagement holes.

Also, in the above-described first embodiment, a configuration was adopted where the front-rear position of the palm rest 18 was adjusted by sliding the entire console box 10 in the vehicle front-rear direction, and in the second embodiment, in addition to this, the palm rest 18 was slidably adjusted in the vehicle front-rear direction with respect to the console box 100. However, the present invention is not limited to this. For example, an embodiment may also be adopted where the console box does not slide in the vehicle front-rear direction with respect to the vehicle body floor, but where just the palm rest 18 is slidable in the vehicle front-rear direction with respect to the console box.

Moreover, in the above-described embodiments, the front-rear position of the palm rest 18 was adjusted by a mechanical slide mechanism, but the invention is not limited to this. The (front-rear) position of the palm rest may also be adjusted by an electrical configuration.

For example, a first switch and a second switch that are swingable up and down may be disposed on the left and right sides of the lower portion of the palm rest, the fixed guide rails of the console box may be configured by feed screws, and a rectangular parallelepiped block that engages with the feed screws may be disposed. Then, when the first switch is pushed up, a motor normally rotates so that the block moves toward the front side of the vehicle and causes the console box to move toward the front side of the vehicle. Conversely, when the first switch is pushed down, the motor reversely rotates so that the block moves toward the rear side of the vehicle and causes the console box to move toward the rear side of the vehicle.

The palm rest may also be configured in the same manner. For example, a mobile body corresponding to the block may be fixed to the undersurface side of the palm rest and feed screws may be screwed therein. Then, when the second switch is pushed up, a motor normally rotates so that the mobile body moves toward the front side of the vehicle and causes the palm rest to move toward the front side of the vehicle. Conversely, when the second switch is pushed down, the motor reversely rotates so that the mobile body moves toward the rear side of the vehicle and causes the palm rest to move toward the rear side of the vehicle.

When this configuration is adopted, it is preferable to dispose a deceleration mechanism between the motor and the feed screws in order to reduce the moving speed of the palm rest.

Also, in the above-described embodiments, the operation portion was disposed on the console boxes 10 and 100, but the invention is not limited to this. For example, the operation portion may also be disposed on a center cluster or door trim. In other words, in addition to a console box, interior members such as a center cluster and door trim are also included in the operation portion installation of the invention. Consequently, depending on the operation portion installation, there are also cases where the direction in which the palm rest is moved by the palm rest moving means is not the vehicle front-rear direction but the vehicle width direction or a vehicle diagonal direction.

Moreover, an arm rest directly attached to a vehicular seat is also included in the term "adjacent" in the recitation "operation portion installation disposed adjacent to a vehicular seat" in the first aspect of the invention. In this case, the arm rest corresponds to the "operation portion installation."

Also, the term "rearward" in the recitation "disposed rearward of the operation portion" in the first aspect of the invention means relatively rearward with respect to a passenger at a position where the passenger is seated in the vehicular seat.

## Claims

1. A vehicular switch operation mechanism configured to include an operation portion that is disposed on an operation portion installation disposed adjacent to a vehicular seat and which a passenger operates with his/her fingers and a palm rest that is disposed rearward of the operation portion and on which the passenger rests his/her palm when the passenger operates the operation portion with his/her fingers, the vehicular switch operation mechanism including:
palm rest moving means for moving the palm rest in a vehicle front-rear direction, a vehicle width direction, or a vehicle diagonal direction;
locking means that retains the palm rest in the position after movement; and
release means that is disposed in a range where the passenger can reach the release means with his/her fingers when the passenger rests his/her palm on the palm rest and is for releasing the locked state by the locking means.

2. The vehicular switch operation mechanism of claim 1, wherein
the palm rest moving means is configured by a palm rest moving mechanism that moves the palm rest relative to the operation portion installation, and
the locking means is configured by a palm rest locking mechanism that retains the palm rest in the position to which the palm rest has been moved by the palm rest moving mechanism.

3. The vehicular switch operation mechanism of claim 1, wherein
the palm rest moving means is configured by an operation portion installation moving mechanism that moves the operation portion installation integrally with the palm rest with respect to a vehicle body floor in the vehicle front-rear direction, the vehicle width direction, or the vehicle diagonal direction, and
the locking means is configured by an operation portion installation locking mechanism that retains the operation portion installation in the position to which the operation portion installation has been moved by the operation portion installation moving mechanism.

4. The vehicular switch operation mechanism of claim 2, wherein
the palm rest moving means further includes an operation portion installation moving mechanism that moves the operation portion installation integrally with the palm rest with respect to a vehicle body floor in the vehicle front-rear direction, the vehicle width direction, or the vehicle diagonal direction, and
the locking means further includes an operation portion installation locking mechanism that retains the operation portion installation in the position to which the operation portion installation has been moved by the operation portion installation moving mechanism.

5. The vehicular switch operation mechanism of claim 4, wherein the release means is configured by
a first release portion for releasing the locked state of the palm rest by the palm rest locking mechanism, and
a second release portion for releasing the locked state of the operation portion installation by the operation portion installation locking mechanism.

6. The vehicular switch operation mechanism of claim 1, further including
an upper lid member that can close an inner compartment inside the operation portion installation and with which the palm rest is integrally disposed, and
rotating means for rotating the upper lid member,
wherein the locked state of the palm rest by the locking means is released by the release means and the palm rest is moved to a predetermined rotation position by the palm rest moving means, whereby the rotation of the upper lid member via the rotating means is enabled, such that the inner compartment is openable/closeable.

7. The vehicular switch operation mechanism of claim 1, wherein the release means is disposed on a lower portion or a side portion of the palm rest.

8. The vehicular switch operation mechanism of claim 2, wherein the palm rest moving means is configured to move the palm rest in the vehicle front-rear direction with respect to the operation portion installation.

9. The vehicular switch operation mechanism of claim 3, wherein the palm rest moving means is configured to move the operation portion installation integrally with the palm rest with respect to the vehicle body floor in the vehicle front-rear direction.

10. The vehicular switch operation mechanism of claim 1, wherein the vehicular switch operation mechanism is configured such that the movement of the palm rest by the palm rest moving means is conducted stepwise.

11. A vehicular switch operation mechanism configured to include an operation portion that is disposed on an operation portion installation disposed adjacent to a vehicular seat and which a passenger operates with his/her fingers and a palm rest that is disposed rearward of the operation portion and on which the passenger rests his/her palm when the passenger operates the operation portion with his/her fingers, the vehicular switch operation mechanism including:
an operation portion installation moving mechanism that moves the operation portion installation integrally with the palm rest relative to a vehicle body floor;
an operation portion installation locking mechanism that retains the operation portion installation in the position to which the operation portion installation has been moved by the operation portion installation moving mechanism; and
a release portion that is disposed in a range where the passenger can reach the release portion with his/her fingers when the passenger rests his/her palm on the palm rest and is for releasing the locked state of the operation portion installation by the operation portion installation locking mechanism.

12. The vehicular switch operation mechanism of claim 11, further including
a palm rest moving mechanism that moves the palm rest relative to the operation portion installation,
a palm rest locking mechanism that retains the palm rest in the position to which the palm rest has been moved by the palm rest moving mechanism, and
another release portion that is disposed in a range where the passenger can reach the release portion with his/her fingers when the passenger rests his/her palm on the palm rest and is for releasing the locked state by the palm rest locking mechanism.

13. The vehicular switch operation mechanism of claim 12, further including
an upper lid member that can close an inner compartment inside the operation portion installation and with which the palm rest is integrally disposed, and
rotating means for rotating the upper lid member,
wherein the locked state of the palm rest by the palm rest locking mechanism is released by the other release portion and the palm rest is moved to a predetermined rotation position by the palm rest moving mechanism, whereby the rotation of the upper lid member via the rotating means is enabled, such that the inner compartment is openable/closeable.

14. The vehicular switch operation mechanism of claim 11, wherein the release portion is disposed on a lower portion or a side portion of the palm rest.

15. The vehicular switch operation mechanism of claim 12, wherein the vehicular switch operation mechanism is configured such that the movement of the palm rest by the palm rest moving mechanism is conducted stepwise.

16. A vehicular switch operation mechanism configured to include an operation portion that is disposed on an operation portion installation disposed adjacent to a vehicular seat and which a passenger operates with his/her fingers and a palm rest that is disposed rearward of the operation portion and on which the passenger rests his/her palm when the passenger operates the operation portion with his/her fingers, the vehicular switch operation mechanism including:
palm rest moving means for moving the palm rest in a vehicle front-rear direction;
locking means that retains the palm rest in the position after movement; and
release means that is disposed in a range where the passenger can reach the release means with his/her fingers when the passenger rests his/her palm on the palm rest and is for releasing the locked state by the locking means,
wherein the palm rest moving means, the locking means and the release means are configured to allow the palm rest to be moved in the vehicle front-rear direction via the palm rest moving means when the passenger places his/her palm on the palm rest and releases the locked state by the locking means via the release means.

17. The vehicular switch operation mechanism of claim 16, wherein
the palm rest moving means is configured by a palm rest moving mechanism that moves the palm rest relative to the operation portion installation, and
the locking means is configured by a palm rest locking mechanism that retains the palm rest in the position to which the palm rest has been moved by the palm rest moving mechanism.

18. The vehicular switch operation mechanism of claim 16, wherein
the palm rest moving means is configured by an operation portion installation moving mechanism that moves the operation portion installation integrally with the palm rest with respect to a vehicle body floor in the vehicle front-rear direction, and
the locking means is configured by an operation portion installation locking mechanism that retains the operation portion installation in the position to which the operation portion installation has been moved by the operation portion installation moving mechanism.
